# EUROPEAN PATENT APPLICATION

(11) **EP 2 518 425 A1**
(43) Date of publication of application: **31.10.2012**
(21) Application number: 12165800.9
(22) Date of filing: 26.04.2012
(51) Int. Cl.: F25B 39/04, F25B 43/00

(54) **Integrated condenser-accumulator-subcooler assembly for vehicles**

(30) Priority: 27.04.2011 IT TO20110366
(71) Applicant: DENSO THERMAL SYSTEMS S.p.A., 10046 Poirino (Torino) (IT)
(72) Inventor: Tiziano, Giuseppe, I-10046 Poirino (Torino) (IT); Maione, Gabriele, I-10046 Poirino (Torino) (IT); Perocchio, Davide, I-10046 Poirino (Torino) (IT)
(74) Representative: Vanzini, Christian

(57) **Abstract**

Heat exchange assembly (10) for vehicles, comprising a condenser (20) and a plate subcooler (40), and an accumulator (30) having an accumulator inlet (31) and an accumulator outlet (32). The condenser and the subcooler are connected to one another in such a way as to form a single pack of plates. The accumulator is defined by a plurality of through apertures (35) formed through the plates, and aligned with one another. The condenser outlet (22) is formed coplanarly with a respective one condenser plate and is in fluid connection with the accumulator inlet (31). The subcooler inlet (41) is formed coplanarly with a respective one subcooler plate and is in fluid connection with the accumulator outlet (32). In the accumulator, a filter (50) is arranged, comprising a cage support (51) and a filtering medium (53) arranged on the cage support. The cage support (51) has a first end (55) provided with a sealing lip formation (56) adapted to elastically engage the edges of the through apertures defining the accumulator, and a second end (57) provided with a spacer (58) adapted to engage a bottom of the accumulator (30) so as to set the position of the sealing formation (56) between the accumulator inlet (31) and the accumulator outlet (32), in such a way as that the accumulator inlet and the accumulator outlet are in mutual fluid connection only through the filtering medium (53).

## Description

The present invention relates to a heat exchange assembly for vehicles, comprising
a condenser having a condenser inlet and a condenser outlet, said condenser having a body formed by a pack of condenser plates secured to one another and defining cavities between a pair of plates and the other for refrigerant fluid to flow therebetween, wherein inlet passages for fluidically connecting said cavities to the condenser inlet and outlet passages for fluidically connecting said cavities to the condenser outlet are formed on said condenser plates;
an accumulator having an accumulator inlet in fluid connection with the condenser outlet, and an accumulator outlet, and including a filter inserted within the accumulator; and
a subcooler having a subcooler inlet in fluid connection with the accumulator outlet, and a subcooler outlet, said subcooler having a body formed by a pack of subcooler plates secured to one another and defining cavities between a plate pair and the other for refrigerant fluid to flow therebetween, wherein inlet passages for fluidically connecting said cavities to the subcooler inlet and outlet passages for fluidically connecting said cavities to the subcooler outlet are formed on said subcooler plates;
wherein said condenser and said subcooler are connected to one another in such a way as to form a single pack of plates;
wherein said accumulator is defined by a plurality of through apertures formed through said plates, and aligned with one another when said plates are in packing relationship;
wherein at least one of said outlet passages of the condenser plates is formed coplanarly with a respective one of said condenser plates and constitutes the condenser outlet, being in fluid connection with the accumulator inlet; and
wherein at least one of said inlet passages of the subcooler plates is formed coplanarly with a respective one of said subcooler plates and constitutes the subcooler inlet, being in fluid connection with the accumulator outlet.

The conventional condensers for automotive uses, inserted in the conventional refrigerant circuit, are air-refrigerant heat exchangers.

Such condensers are exchangers with welded elements, and are produced with jacketed fins and extruded tubes, and have integrated accumulators and filtering systems.

In recent years, water-cooled condensers (WCDS) have been developed, to be inserted in a low temperature refrigerant circuit (LTCL).

Such low temperature circuits are constantly under development, due to the increasing demand of the automotive market and the needs for a reduction of pollutant emissions and fuel consumption.

The LTCL circuit is a circuit which is separated from the engine refrigerant circuit, composed by a dedicated radiator, an electric water pump, and a number of auxiliary heat exchangers. Such circuit operates at low temperatures of the refrigerant (∼50°C), in order to cool the intercooler, condenser, EGR cooler and the electronics for hybrid or electric vehicles.

The advantages of the LTCL systems are as follows:
- simplification of the architecture of the conditioning system and a low condensation pressure (with consequent low fuel consumption and reduced pollutant emissions);
- simplification and standardization of the vehicle front part;
- simplification of the air charge architecture, lower temperature of the air charge, lower pressure drop of the air charge;
- flexibility of the system in integrating other components, such as automatic transmission oil cooler (ATOC), EGR cooler, electronics cooler;
- better ability in thermal management.

In the LTCL circuit field, plate condensers and subcoolers have been developed with a separated modulator.

Such technique involves some drawbacks:
- undue weight and sizes, due to the use of multiple separate components;
- increase of the annual refrigerant loss, due to the high number of connections between condenser and modulator, and between modulator and subcooler (in this regards, it shall be noted that the new European standards require a radical reduction of such losses).

FR 2 947 041 discloses a heat exchange assembly of the type defined at the beginning. Such exchanger assembly is an integrated assembly comprising a condenser, a subcooler, and an accumulator, in which a filter is included.

An object of the present invention is to provide a heat exchange assembly for vehicles which is able to at least partially obviate the above-listed drawbacks. A particular object is to provide a heat exchange assembly for vehicles wherein the arrangement of the filter within the accumulator is carried out easily and in an inexpensive manner.

Such objects are achieved according to the invention by a heat exchange assembly of the type defined at the beginning, wherein said filter comprises a cage support and a filtering medium arranged on said cage support, said cage support having a first end provided with sealing means adapted to elastically engage the edges of said through apertures defining the accumulator, and a second end provided with spacer means adapted to engage a bottom of the accumulator so as to set the position of the sealing means between the accumulator inlet and the accumulator outlet, in such a way as that the accumulator inlet and the accumulator outlet are in mutual fluid connection only through the filtering medium.

Preferred embodiments of the invention are defined in the dependant claims, which are to be meant as an integral part of the present description.

Further characteristics and advantages of the heat exchange assembly according to the invention will be more clearly understood from the following detailed description of an embodiment of the finding, given with reference to the accompanying drawings, which are given by way of illustrative, non-limiting example only, in which:
- Fig. 1 is a perspective view of a heat exchange assembly according to the invention;
- Fig. 2 is a partially exploded view of the exchanger assembly of Fig. 1;
- Fig. 3 is an enlarged scale view of a part of the exchanger assembly of Fig. 2, indicated by the arrow III;
- Fig. 4 is a further enlarged scale view of a detail of Fig. 3;
- Fig. 5 is a perspective view of a filter for the exchanger assembly of Fig. 1; and
- Figs. 6 and 7 are cross-sectional views of the exchanger assembly of Fig. 1, which show an initial step and a final step of the installation of the filter of Fig. 5 in an accumulator of the heat exchange assembly.

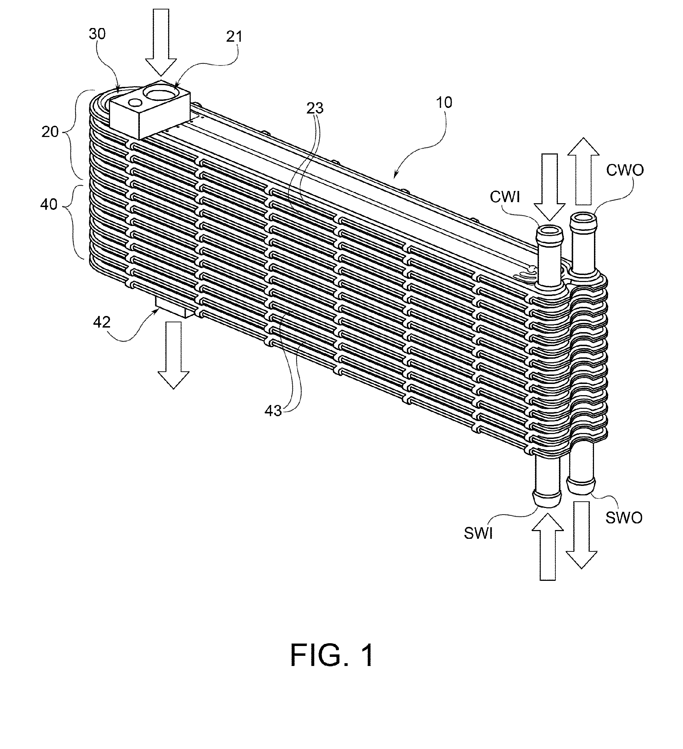

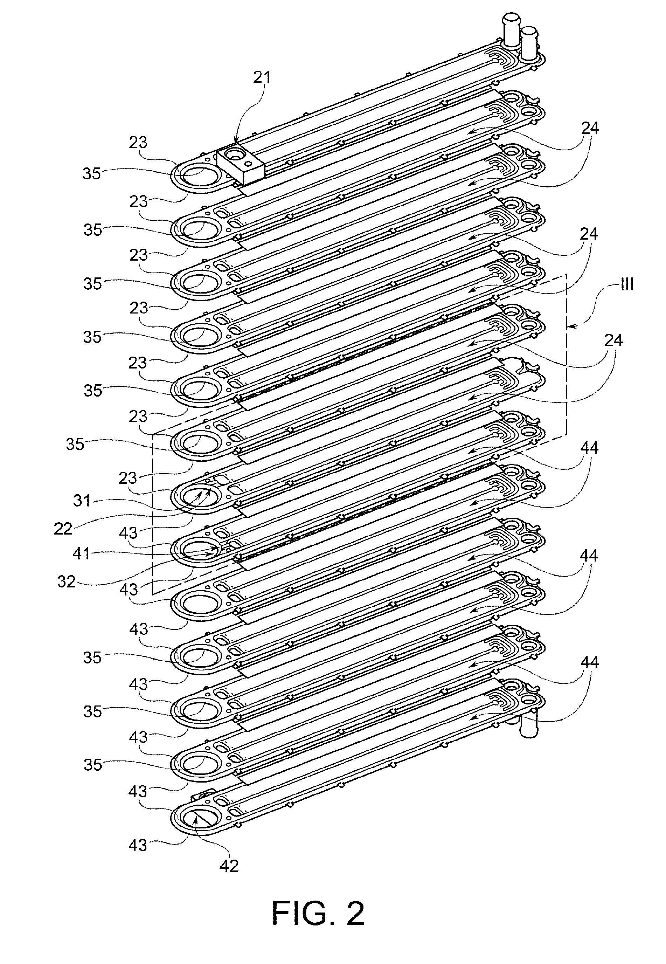

With reference to the Figs. 1 and 2, a heat exchange assembly for vehicles is indicated 10. The assembly 10 is formed by a single, indivisible constructive unit, which performs the function of a condenser and subcooler for an LTCL circuit, with an accumulator fluidically interposed therebetween. Conventionally, the condenser cools the gaseous refrigerant coming from the radiator, and partially condensates it to liquid refrigerant. The accumulator (also known as modulator or liquid receiver) separates the liquid and gaseous refrigerants, and sends the liquid refrigerant to the subcooler. The subcooler further cools the liquid refrigerant in order to increase the enthalpy thereof.

The refrigerant fluid path through the condenser, the accumulator, and the subcooler is represented by arrows in the Figures.

Therefore, the exchanger assembly 10 comprises a condenser 20, having a condenser inlet 21 and a condenser outlet 22 for the refrigerant. In the Figures, a condenser water inlet CWI and a condenser water outlet CWO are further represented, for the refrigerant cooling water. The water path in the condenser is not an object of the present invention; therefore, it is not described herein.

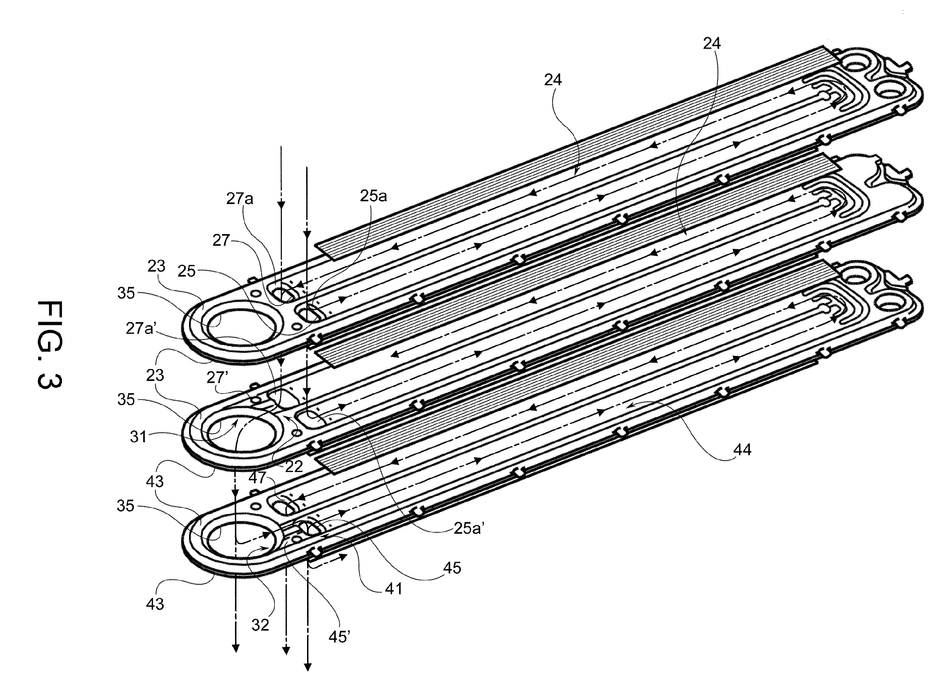

The condenser 20 has a body formed by a pack of condenser plates 23 secured to one another and defining cavities between a pair of plates 23, 23 and the other for refrigerant fluid to flow. As it can be seen in particular in Fig. 3, in the illustrated example, each pair of plates comprises two plates connected by crimping to one another, and defining a cavity therebetween for the water to flow, which is not visible in the Figures. Instead, the refrigerant fluid flow cavities are shown open, due to the exploded view, and they will be described in more detail herein below. As it can be appreciated, the cavities for water are alternated to the refrigerant fluid cavities, and the plates 23 thereby define the thermal exchange surfaces between the two fluids. In the finished product, the plates 23 are conventionally welded to one another.

Each of the cavities for refrigerant fluid to flow is formed by two cavity halves that are substantially specular, formed on adjacent plates 23. In the Figures, only one of the halves of each cavity is visible, indicated 24. As it can be seen, each cavity half 24 is formed by a depressed portion of the corresponding plate 23 having a U-shaped path extending along such plate, and obtained, for example, by means of plastic deformation of the material of the plate itself. More generally, the plates have a corrugated, or anyhow variably convoluted section, in order to define the thermal exchange surfaces, the paths, and the cavities in a desired shape.

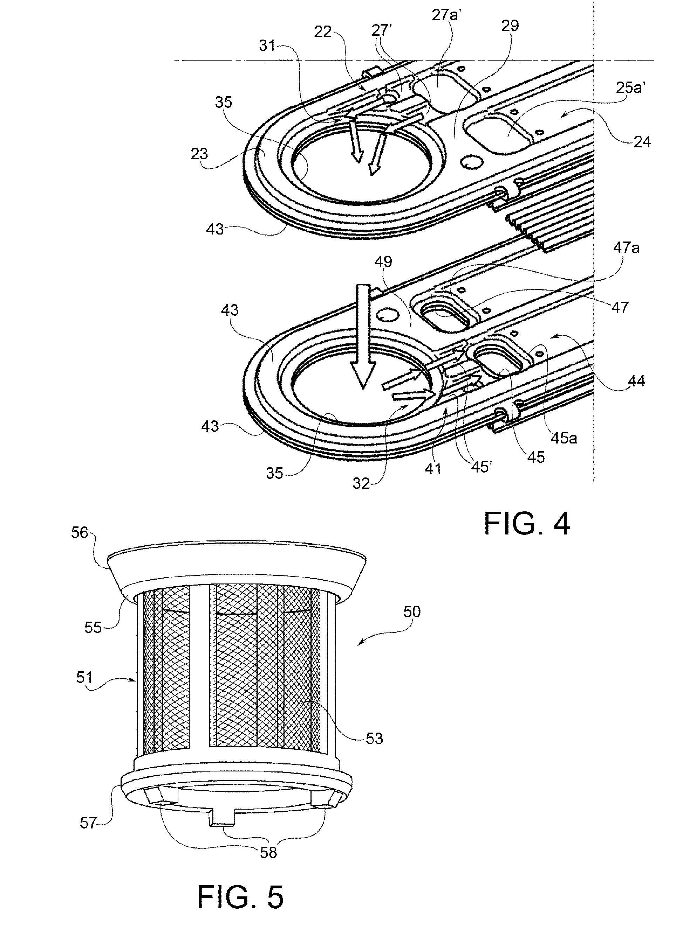

Inlet passages 25 are formed on the condenser plates 23, to put the refrigerant cavities in fluidic communication with the condenser inlet 21, and outlet passages 27, 27' to put such cavities in fluidic communication with the condenser outlet 22. One of the outlet passages, indicated 27', in fact constitutes the condenser outlet 22. Such outlet passage 27' is formed coplanarly to the corresponding condenser plate 23, as it can be seen in particular in Fig. 4.

With the exception of the condenser outlet, the inlet and outlet passages 25, 27 of the condenser plates 23 are constituted by through apertures formed through the condenser plates 23, on which the ends of the refrigerant fluid flow cavities are directly open.

In the packing condition of the plates 23, the through apertures constituting the inlet passages 25 of the condenser plates 23 are arranged aligned with one another, defining a condenser inlet header, in fluid connection with the condenser inlet 21, and the through apertures constituting the outlet passages 27 of the condenser plates 23 are arranged aligned with one another defining a condenser outlet header, in fluid connection with the condenser outlet 22. The above-mentioned inlet and outlet headers are arranged at one side end of the heat exchange assembly.

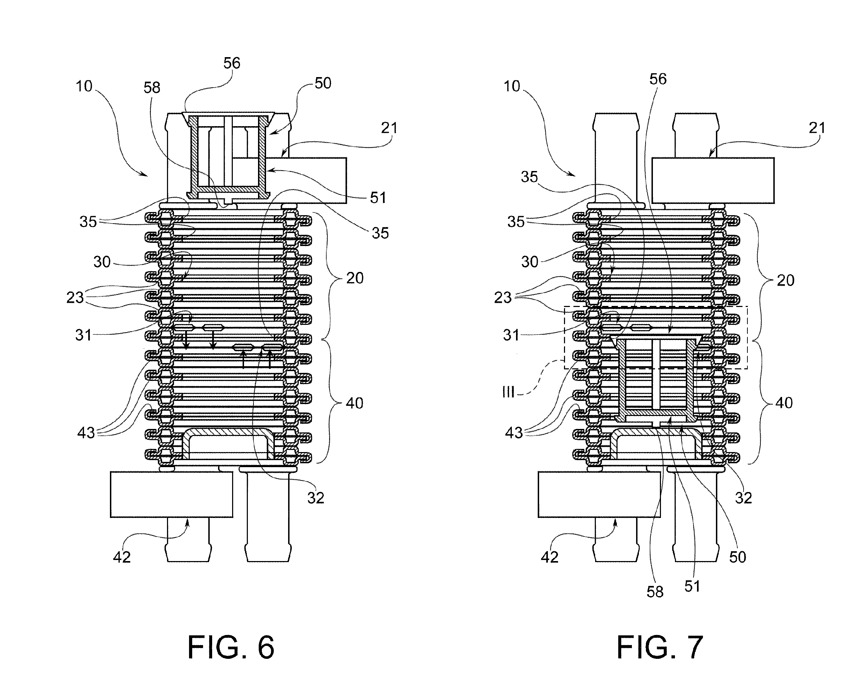

The exchange assembly 10 then comprises an accumulator 30 having an accumulator inlet 31 in fluid connection with the condenser outlet 22, and an accumulator outlet 32, which are visible in particular in the Figs. 6 and 7. Such accumulator will be described in more detail herein below.

The exchange assembly 10 further comprises a plate subcooler 40. The subcooler 40 has a subcooler inlet 41 and a subcooler outlet 42 for the refrigerant. In Fig. 1, a subcooler water inlet SWI and a subcooler water outlet SWO are further represented, for the refrigerant cooling water. The water path in the subcooler is not an object of the present invention; therefore, it is not described herein.

The subcooler 40 is connected to the condenser 20 in such a way as to form a single pack of plates. From a structural point of view, in fact, the subcooler is composed by unitary elements that are substantially the same as those of the condenser 20. The last condenser plate and the first subcooler plate constitute so-called connection plates, fluidically separating the condenser 20 from the subcooler 40. In Fig. 3, the connection plates are composed of the central pair of plates, looking top-down. In Fig. 4, such connection plates are represented in a further enlarged scale, together with the pair of subcooler plates contiguous thereto.

The subcooler 40 has a body formed by a pack of subcooler plates 43 secured to one another and defining cavities between a pair of plates 43, 43 and the other for the refrigerant fluid to flow. As it can be seen in particular in Fig. 3, in the illustrated example, each pair of plates comprises two plates connected by crimping to one another, and defining a cavity for the water to flow therebetween, which is not visible in the Figures. Instead, the refrigerant fluid flow cavities are shown open, due to the exploded view, and they will be described in more detail herein below. As it can be appreciated, the water cavities are alternated to the refrigerant fluid cavities, and the plates 43 thereby define thermal exchange surfaces between the two fluids. In the finished product, the subcooler plates 43 are conventionally welded to one another, together with the condenser plates 23.

Each of the cavities for the refrigerant fluid to flow is formed by two cavity halves that are substantially specular, formed on adjacent subcooler plates 43. In the Figures, only one of the halves of each cavity is visible, indicated 44. As it can be seen, each cavity half 44 is formed by a depressed portion of the corresponding plate 43, having a U-shaped path extending along such plate, and obtained for example by plastic deformation of the material of the plate itself. More generally, the plates have a corrugated, or anyhow variably convoluted section, in order to define thermal exchange surfaces, the passages, and the cavities in a desired shape.

Inlet passages 45, 45' are formed on the subcooler plates 43, in order to put the refrigerant cavities in fluidic communication with the subcooler inlet 41, and outlet passages 47 in order to put such cavities in fluidic communication with the subcooler outlet 42. One of the inlet passages, indicated 45', in fact constitutes the subcooler inlet 41. Such inlet passage 45' is formed coplanarly to the corresponding subcooler plate 43, as it can be seen in particular in Fig. 4.

As it can be seen in the Figs. 3, 4, 6, and 7, the outlet passages 27' constituting the condenser outlet 22/accumulator inlet 31 and the inlet passages 45' constituting the subcooler inlet 41/accumulator outlet 32 are formed at least on the connection plates between the condenser and the subcooler.

With the exception of the subcooler inlet/accumulator outlet, the inlet and outlet passages 45, 47 of the subcooler plates 43 are constituted by through apertures formed through the subcooler plates 43, on which the ends of the refrigerant fluid flow cavities are directly open.

In the packing condition of the subcooler plates 43, the through apertures constituting the inlet passages 55 of the subcooler plates 43 are arranged aligned with one another, defining a subcooler inlet header, in fluid connection with the subcooler inlet 41, and the through apertures constituting the outlet passages 47 of the subcooler plates 43 are arranged aligned with one another, defining a subcooler outlet header, in fluid connection with the subcooler outlet 42. The above-mentioned inlet and outlet headers are arranged at one side end of the heat exchange assembly.

The accumulator 30 is defined by a plurality of through apertures 35 formed through the condenser 23 and subcooler 43 plates, and aligned with one another when such plates 23, 43 are in packing relationship. The accumulator 30 is arranged at one side end of the heat exchange assembly, in the proximity of the inlet and outlet headers of the condenser and the subcooler.

The accumulator 30 is fluidically separated from the refrigerant fluid flow cavities by means of projecting portions 29, 49 of the plates 23 and 43 surrounding the through apertures 35 of the plates 23 and 43, and are sealingly joined to one another when the plates are in the packing condition. The projection relationship is defined in the direction perpendicular to the planes of the plates, relative to the depressed portions 24, 44 forming the cavities between the plates. The condenser outlet 22/accumulator inlet 31 and the subcooler inlet 41/accumulator outlet 32 are formed through the projecting portions 29, 49 of some of the plates 23, 43, in particular the projecting portions of the connection plates between the condenser and the subcooler. The condenser outlet 22/accumulator inlet 31 and the subcooler inlet 41/accumulator outlet 32 are located in a length of the projecting portions interposed between the accumulator 30 and the cavities, and extend in a direction parallel to the longitudinal direction of the plates, as it can be seen in particular in Fig. 4.

The through apertures constituting the inlet 25, 45 and outlet passages 27, 47 of the condenser and subcooler plates are formed through corresponding punched recesses 25a, 45a, 27a, 47a formed on the plates at the ends of the depressed portions 24, 44. Corresponding punched blind recesses 25a', 27a' are arranged at the connection plates (in the Figures, only the punched blind recesses of the condenser side of the connection plates are visible, while those at the subcooler side are hidden), arranged aligned with the other punched recesses, and precisely free from apertures, since the fluid passages are arranged coplanarly to the plates, directly connecting the depressed portion 24, 44 to the through opening 35 of the accumulator of the corresponding plate. Such arrangement actually simplifies the manufacturing process of the heat exchanger plates, since the plates are practically the same, with the only difference characterizing the connection plates, where the punched recesses are free from through apertures, and where the condenser outlet and subcooler inlet passages are formed, arranged coplanarly to the plates (it shall be clear that such outlet and inlet passages can be also formed in the corresponding condenser and subcooler plates, arranged in contact with the connection plates, as in the illustrated example - see in particular the Figs. 4, 6, and 7).

As it can be seen in the Figs. 5 to 7, the assembly 10 further includes a filter 50 inserted within the accumulator 30. Such filter 50 comprises a cage support 51 and a filtering medium 53 arranged on the cage support 51. The filtering medium acts to hold optional foreign material which can be present in the refrigerant fluid.

The cage support 51 has a first end 55 provided with sealing means 56 adapted to elastically engage the edges of the through apertures 35 defining the accumulator 30, and a second end 57 provided with spacer means 58 adapted to engage a bottom of the accumulator 30 so as to set the position of the sealing means 56 between the accumulator inlet 31 and the accumulator outlet 32, in such a way as that the accumulator inlet and outlet are in mutual fluidic connection only through the filtering medium 53.

Preferably, the sealing means comprise a sealing lip formation arranged circumferentially/peripherally on the first end 55 of the cage support 51.

The spacer means can be constituted by axially projecting formations, arranged on the second end 56 of the cage support 51. The axial extent of such spacer means is advantageously sizeable as a function of the number of plates and the arrangement of the accumulator inlet and outlet, and, therefore, as a function of the accumulator 30 axial dimensions.

The installation of the filter takes place as illustrated in the Figs. 6 and 7, which represent cross sections of the exchanger, taken along the accumulator. The filter 50 is inserted in the accumulator 30 from its condenser side end, through the through opening 35 of the first condenser plate 23 (Fig. 6). During the installation process, the sealing lip formation 56 engage in sequence the edges of the through apertures of the plates through which the filter passes, while advancing towards the accumulator bottom, repeatedly flexing and bouncing back in a resting condition. When the spacer means abut against the accumulator bottom (Fig. 7), the filter movement halts, and the sealing lip formation comes to be correctly positioned between the accumulator inlet and outlet, engaging the edges of the through opening 35 associated to the connection plates between condenser and subcooler.

## Claims

1. A heat exchange assembly (10) for vehicles, comprising
a condenser (20) having a condenser inlet (21) and a condenser outlet (22), said condenser having a body formed by a pack of condenser plates (23) secured to one another and defining cavities between a pair of plates and the other for refrigerant fluid to flow therebetween, wherein inlet passages (25) for fluidically connecting said cavities to the condenser inlet and outlet passages (27, 27') for fluidically connecting said cavities to the condenser outlet are formed on said condenser plates;
an accumulator (30) having an accumulator inlet (31) in fluid connection with the condenser outlet (22), and an accumulator outlet (32), and including a filter (50) inserted within the accumulator (30); and
a subcooler (40) having a subcooler inlet (41) in fluid connection with the accumulator outlet (32), and a subcooler outlet (42), said subcooler having a body formed by a pack of subcooler plates (43) secured to one another and defining cavities between a pair of plates and the other for refrigerant fluid to flow therebetween, wherein inlet passages (45, 45') for fluidically connecting said cavities to the subcooler inlet and outlet passages (47) for fluidically connecting said cavities to the subcooler outlet are formed on said subcooler plates;
wherein said condenser and said subcooler are connected to one another in such a way as to form a single pack of plates;
wherein said accumulator is defined by a plurality of through apertures (35) formed through said plates, and aligned with one another when said plates are in packing relationship;
wherein at least one (27') of said outlet passages of the condenser plates (23) is formed coplanarly with a respective one of said condenser plates, and constitutes the condenser outlet (22), being in fluid connection with the accumulator inlet (31); and
wherein at least one (45') of said inlet passages of the subcooler plates (43) is formed coplanarly with a respective one of said subcooler plates and constitutes the subcooler inlet (41), being in fluid connection with the accumulator outlet (32);
**characterized in that** said filter comprises a cage support (51) and a filtering medium (53) arranged on said cage support, said cage support (51) having a first end (55) provided with sealing means (56) adapted to elastically engage the edges of said through apertures defining the accumulator, and a second end (57) provided with spacer means (58) adapted to engage a bottom of the accumulator (30) so as to set the position of the sealing means (56) between the accumulator inlet (31) and the accumulator outlet (32), in such a way as that the accumulator inlet and the accumulator outlet are in mutual fluid connection only through the filtering medium (53).

2. An assembly according to claim 1, wherein said sealing means comprise a sealing lip formation arranged circumferentially on the first end (55) of the cage support (51).

3. An assembly according to claim 1 or 2, wherein said accumulator is fluidically separated from said cavities for refrigerant fluid to flow by means of projecting portions (29, 49) of the plates (23, 43) surrounding each of the through apertures (35) of the plates (23, 43) and are sealingly joined to one another when the plates are in packing relationship, and wherein the condenser outlet (22) and the subcooler inlet (41) are formed through said projecting portions of the plates, being located in a length of the projecting portions of the plates interposed between said accumulator and said cavities, and extending in a direction which is parallel to the longitudinal direction of said plates.

4. An assembly according to any of the claims 1 to 3, wherein the last condenser plate and the first subcooler plate constitute connection plates fluidically separating said condenser from said subcooler, and wherein the outlet passages (27') constituting the condenser outlet (22) and the inlet passages (45') constituting the subcooler inlet (41) are formed at least on said connection plates.

5. An assembly according to claim 4, wherein, with the exception of the condenser outlet (22) and the subcooler inlet (41), the inlet and outlet passages (25, 45, 27, 47) of the condenser plates (23) and the subcooler plates (43) are constituted by through apertures formed through said condenser plates and subcooler plates.

6. An assembly according to claim 5, wherein, with said plates in packing relationship,
the through apertures constituting the inlet passages (25) of the condenser plates (23) are arranged aligned with one another, defining a condenser inlet header;
the through apertures constituting the inlet passages (45) of the subcooler plates (43) are arranged aligned with one another, defining a subcooler inlet header,
the through apertures constituting the outlet passages (27) of the condenser plates (23) are arranged aligned with one another, defining a condenser outlet header; and
the through apertures constituting the outlet passages (47) of the subcooler plates (43) are arranged aligned with one another, defining a subcooler outlet header.

7. An assembly according to claim 6, wherein said inlet and outlet headers and said accumulator are arranged at one side end of the heat exchange assembly.

8. An assembly according to any of the claims 4 to 7, wherein the through apertures constituting the inlet and outlet passages (25, 45, 27, 47) are formed through punched recesses (25a, 45a, 27a, 47a) formed on the plates (23, 43), the connection plates having corresponding punched blind recesses (25a', 27a').

9. A filter accumulator for a plate heat exchanger (10), wherein said plate heat exchanger comprises an accumulator (30) defined by a plurality of through apertures (35), aligned with one another and formed through plates (23, 43) of the heat exchanger, **characterized in that** said filter comprises a cage support (51) and a filtering medium (53) arranged on said cage support, said cage support having a first end (55) provided with sealing means (56) adapted to elastically engage the edges of said through apertures defining the accumulator (30), and a second end (57) provided with spacer means (58) adapted to engage a bottom of the accumulator (30) so as to set the position of the sealing means (56) within the accumulator (30).

10. A filter according to claim 9, wherein said sealing means comprise a sealing lip formation arranged circumferentially on the first end (55) of the cage support (51).
